# EUROPEAN PATENT APPLICATION

(11) **EP 4 813 694 A1**
(43) Date of publication of application: **30.09.2026**
(21) Application number: 26162475.3
(22) Date of filing: 05.03.2026
(51) Int. Cl.: B60K 1/04, B60L 50/64, H01M 50/244

(54) **VEHICLE LOWER SECTION STRUCTURE**

(30) Priority: 26.03.2025 JP 2025052329
(71) Applicant: Toyota Jidosha Kabushiki Kaisha, Toyota-shi, Aichi-ken 471-8571 (JP)
(72) Inventor: ICHISAWA, Kota, Toyota-shi, Aichi-ken, 471-8571 (JP); TAMAMURA, Atsuhiro, Nagoya, Aichi, 456-0023 (JP)
(74) Representative: TBK

(57) **Abstract**

A vehicle lower section structure includes: a battery module that is arranged at a lower section of a vehicle; a battery case that includes an upper cover section covering an upper face of the battery module and that houses the battery module; a cover board that includes a plurality of projection portions each projecting from an upper face of the cover board, that is arranged between the battery module and the upper cover section, and that supports a lower face of the upper cover section by the plurality of projection portions; and an adhesive layer that is provided between adjacent projection portions, and that bonds the upper face of the cover board to the lower face of the upper cover section.

## Description

### BACKGROUND

### Technical Field

The present disclosure relates to a vehicle lower section structure.

### Related Art

A battery mounting structure in which a battery case housing a battery module (battery stack) is mounted at a lower side of a floor panel (floor pan) is known (see, for example, Japanese Patent Application Laid-Open (JP-A) No. 2018-202946). In such a battery mounting structure, an upper cover section of the battery case covering the upper face of the battery module also serves the role of a floor panel.

When, for example, arranging a cover board between the battery module and the upper cover section to protect the battery module, one conceivable option is to bond the upper face of the cover board and the lower face of the upper cover section together through an adhesive layer.

However, controlling the layer thickness of the adhesive layer is difficult when bonding the upper face of the cover board and the lower face of the upper cover section together using an adhesive layer, and there is, for example, a possibility that the adhesive strength of the adhesive layer might be insufficient.

An object of the present disclosure is, as an example, to bond an upper face of a cover board and a lower face of an upper cover section together through an adhesive layer having a specific layer thickness.

### SUMMARY

A vehicle lower section structure according to a first aspect includes a battery module that is arranged at a lower section of a vehicle, a battery case that includes an upper cover section covering an upper face of the battery module and that houses the battery module, a cover board that includes plural projection portions each projecting from an upper face of the cover board, that is arranged between the battery module and the upper cover section, and that supports a lower face of the upper cover section by the plural projection portions, and an adhesive layer that is provided between adjacent projection portions, and that bonds the upper face of the cover board to the lower face of the upper cover section.

In the vehicle lower section structure according to the first aspect, the battery module is arranged at the lower section of the vehicle. The battery module is housed in the battery case. The battery case includes the upper cover section covering the upper face of the battery module. The cover board is arranged between the upper cover section and the battery module.

The cover board includes the plural projection portions. The plural projection portions project from the upper face of the cover board, and support the lower face of the upper cover section. The adhesive layer is provided between the adjacent projection portions. The upper face of the cover board and the lower face of the upper cover section are bonded together by the adhesive layer.

When bonding the upper face of the cover board and the lower face of the upper cover section together through the adhesive layer, due to supporting the lower face of the upper cover section with the plural projection portions projecting from the upper face of the cover board, the specific gap is formed between the upper face of the cover board and the lower face of the upper cover section. The adhesive layer for bonding the upper face of the cover board and the lower face of the upper cover section together can be made a specific layer thickness due to this gap.

The present aspect is accordingly able to bond the upper face of the cover board covering the upper face of the battery module, and the lower face of the upper cover section, together through the adhesive layer having the specific layer thickness.

A vehicle lower section structure according to a second aspect is the vehicle lower section structure according to the first aspect, wherein the projection portions are each configured by a rib extending in a specific direction, and the adhesive layer is provided between adjacent ribs.

In the vehicle lower section structure according to the second aspect, the projection portions are configured by the ribs extending in the specific direction. The adhesive layer is provided between the adjacent ribs.

The lower face of the upper cover section is accordingly supported by the plural ribs projecting from the upper face of the cover board, with the specific gap formed between the upper face of the cover board and the lower face of the upper cover section, across the entire length of the ribs. This gap enables the adhesive layer bonding the upper face of the cover board and the lower face of the upper cover section together to be made the specific layer thickness.

Moreover, when bonding the upper face of the cover board and the lower face of the upper cover section together through the adhesive layer, due to providing the adhesive layer between the adjacent ribs, the adhesive layer prior to curing is restricted from flowing by the adjacent ribs. This means that leakage of the adhesive layer, prior to curing, out from between the upper face of the cover board and the lower face of the upper cover section is suppressed.

The vehicle lower section structure according to a third aspect is the vehicle lower section structure according to the second aspect, wherein a through-path is formed between the rib and the adhesive layer so as to run alongside the rib.

In the vehicle lower section structure according to the third aspect, the through-path is formed between the rib and the adhesive layer so as to run alongside the rib.

When the upper face of the cover board and the lower face of the upper cover section are bonded together through the adhesive layer, the upper cover section becomes difficult to remove from the cover board. This means that, for example, it might take some effort to perform maintenance or the like on the battery module.

In order to address this, in the present aspect, when removing the upper cover section from the cover board, the adhesive layer can be cut by a cutting tool by sliding the cutting tool such as a wire or the like toward the adhesive layer side while in a state in which, for example, the cutting tool has been passed through the through-path between the rib and the adhesive layer. This thereby enables the upper cover section to be removed from the cover board easily.

A vehicle lower section structure according to a fourth aspect is the vehicle lower section structure according to the third aspect, wherein the through-path is formed at each side of the adhesive layer, and runs alongside the rib so as to pass through between the upper cover section and the cover board.

In the vehicle lower section structure according to the fourth aspect, the through-path is formed at each side of the adhesive layer, and runs alongside the rib so as to pass through between the upper cover section and the cover board.

This means that when removing the upper cover section from the cover board, for example, a wire serving as a cutting tool is curved in a plan view U-shape and passed through the through-paths on both sides of the adhesive layer. When in this state, the adhesive layer can be cut by the curved section of the wire by pulling the two end portions of the wire. This thereby enables the upper cover section to be removed from the cover board even easier.

A vehicle lower section structure according to a fifth aspect is the vehicle lower section structure according to the third aspect or the fourth aspect, wherein the cover board includes a guide rib that projects from the upper face of the cover board between the rib and the adhesive layer, and that is arranged at a spacing away from the lower face of the upper cover section, and the through-path is formed between the rib and the guide rib.

In the vehicle lower section structure according to the fifth aspect, the cover board includes the guide ribs. The guide ribs projects from the upper face of the cover board between the rib and the adhesive layer, and is arranged at a spacing away from the lower face of the upper cover section. The through-path is formed between this guide rib and the rib.

This means that when removing the upper cover section from the cover board, the adhesive layer can, for example, be cut by a cutting tool by passing a wire serving as a cutting tool through the through-path between the rib and the guide rib, and sliding the cutting tool toward the adhesive layer side. This thereby enables the upper cover section to be removed from the cover board easily.

Moreover, when bonding the upper face of the cover board and the lower face of the upper cover section together through the adhesive layer, the adhesive layer is restricted from flowing toward the through-path side prior to curing by the guide ribs. This thereby facilitates securing the through-path between the rib and the adhesive layer.

In the present aspect, the upper face of the cover board and the lower face of the upper cover section can be bonded together through the adhesive layer of a specific layer thickness, while securing the through-path between the rib and the adhesive layer.

A vehicle lower section structure according to a sixth aspect is the vehicle lower section structure according to the third aspect, wherein a one-end side of the through-path widens on progression toward one end thereof.

In the vehicle lower section structure according to the sixth aspect, the one-end side of the through-path widens on progression toward the one-end. This means that when removing the upper cover section from the cover board, a wire serving as a cutting tool, for example, is easily inserted into the one-end side of the through-path. This thereby enables even easier removal of the upper cover section from the cover board.

A vehicle lower section structure according to a seventh aspect is the vehicle lower section structure according to the first aspect, wherein a lower face of the cover board is bonded to an upper face of the battery module.

In the vehicle lower section structure according to the seventh aspect, the lower face of the cover board is bonded to the upper face of the battery module. Namely, the upper face of the battery module is bonded to the lower face of the upper cover section with the cover board interposed therebetween.

When, for example, a collision object collides with a vehicle mounted with a battery case, there is a possibility of the battery module moving inside the battery case relatively toward the collision object side under the action of inertia, and the collision object interfering with the battery module.

In order to address this, in the present aspect the upper face of the battery module is bonded to the lower face of the upper cover section through the cover board as described above. This means that, when a collision object has collided with a vehicle mounted with a battery case, the upper cover section, the cover board, and the battery module readily move as a single body toward the opposite side to the collision object. This thereby enables the collision object to be suppressed from interfering with the battery module.

A vehicle lower section structure according to an eighth aspect is the vehicle lower section structure according to the first aspect, wherein at least part of the upper cover section forms a floor of a vehicle cabin.

In the vehicle lower section structure according to the eighth aspect, at least part of the upper cover section of the battery case forms the floor of the vehicle cabin. This thereby enables, in the present aspect, the number of components to be reduced compared to cases in which the floor of the vehicle cabin is formed by a floor panel separate to the upper cover section.

On the other hand, when the floor of a vehicle cabin is formed by the upper cover section, there is a possibility of the battery module being damaged or the like due to load of a passenger or the like being transmitted to the upper face of the battery module as localized vertical load through the upper cover section.

In order to address this, in the present aspect, the vertical load acting on the upper cover section is distributed and transmitted to the upper face of the battery module through the cover board. This thereby enables the battery module to be suppressed from being damaged or the like.

A vehicle lower section structure according to a ninth aspect is the vehicle lower section structure according to the first aspect, wherein the upper cover section is made from a metal, and the cover board is made from a resin.

In the vehicle lower section structure according to the ninth aspect, the upper cover section is made from a metal. This thereby enables strength to be secured in the upper cover section, while making a thickness of the upper cover section thin.

On the other hand, the cover board is made from a resin. This thereby enables the projection portions to be formed easily on the upper face of the cover board, while achieving a reduction in weight of the cover board.

A vehicle lower section structure according to a tenth aspect is the vehicle lower section structure according to the second aspect, wherein the battery module includes plural battery cells arrayed in the specific direction, and the ribs are arranged so as to span the plural battery cells as viewed along a vehicle height direction.

In the vehicle lower section structure according to the tenth aspect, the battery module includes the plural battery cells arrayed in the specific direction. Moreover, the plural ribs are arranged so as to span the plural battery cells as viewed along a vehicle height direction.

Due to the ribs being arranged so as to span the plural battery cells as viewed along the vehicle height direction, for example, vertical load acting on the upper cover section is distributed and transmitted to the upper face of each of the battery cells through the plural ribs and the cover board. This thereby enables the battery module to be suppressed from being damaged or the like.

A vehicle lower section structure according to an eleventh aspect is the vehicle lower section structure according to the tenth aspect, wherein the plural battery cells are arrayed along a vehicle front-rear direction, and the plural of ribs each extend along the vehicle front-rear direction and are arranged at a spacing to each other in a vehicle width direction.

In the vehicle lower section structure according to the eleventh aspect, the plural battery cells are arrayed in the vehicle front-rear direction. Moreover, the plural ribs extend in the vehicle front-rear direction, and are arranged spacing away from each other in the vehicle width direction.

This means that in the present aspect, due to the plural battery cells being arrayed in the vehicle front-rear direction, the number of battery cells that can be arrayed in a single row can be increased compared to cases in which the plural battery cells are arrayed in the vehicle width direction.

Moreover, as described above, the plural ribs extend in the vehicle front-rear direction, and are arranged spacing away from each other in the vehicle width direction.

Due to these ribs being arranged so as to span the plural battery cells when viewed along the vehicle height direction, the vertical load acting on the upper cover section is distributed and transmitted to the upper face of each of the battery cells through the plural ribs and the cover board. This thereby enables damage or the like to be suppressed from occurring to the battery module.

As described above, the present disclosure enables an upper face of a cover board and a lower face of an upper cover section to be bonded together through an adhesive layer of a specific layer thickness.

### BRIEF DESCRIPTION OF THE DRAWINGS

Exemplary embodiments of the present invention will be described in detail based on the following figures, wherein:
Fig. 1 is a cross-section of a vehicle applied with a vehicle lower section structure according to an exemplary embodiment, as viewed from a vehicle width direction;
Fig. 2 is a plan view illustrating battery modules illustrated in Fig. 1;
Fig. 3 is a cross-section taken on line 3-3 of Fig. 2;
Fig. 4 is an exploded cross-section corresponding to Fig. 3 in which a battery module, an upper cover, and a cover board have been disassembled;
Fig. 5 is a partial enlarged cross-section of Fig. 3;
Fig. 6 is a cross-section taken on line 6-6 of Fig. 5; and
Fig. 7 is a cross-section taken on line 7-7 of Fig. 6.

### DETAILED DESCRIPTION

Description follows regarding an exemplary embodiment, with reference to the drawings. Note that as appropriate in the drawings, arrow FR illustrates a vehicle front side (vehicle front-rear direction forward direction), and arrow UP illustrates a vehicle upper side (vehicle height direction upward direction). Arrow OUT illustrates a vehicle width direction outside. Moreover, when simply front and rear, up and down, and left and right directions are employed in the following description, unless explicitly stated otherwise, these respectively indicate front and rear in the vehicle front-rear direction, up and down in the vehicle height direction, and left and right in the vehicle width direction.

### Vehicle

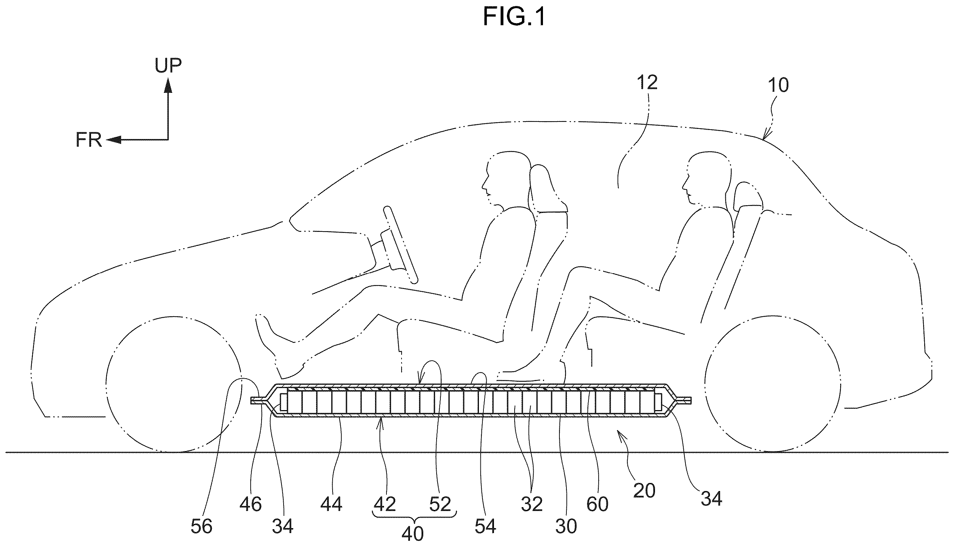

Fig. 1 illustrates a vehicle 10 applied with a vehicle lower section structure according to the present exemplary embodiment. The vehicle 10 is, for example, an electric car having a non-illustrated electric motor as a drive source, or a hybrid car employing both an electric motor and an internal combustion engine as drive sources.

### Battery

A battery (battery pack) 20 is mounted to a lower section of the vehicle 10. The battery 20 is arranged spanning between a non-illustrated pair of rockers, which are arranged at each vehicle width direction side of the vehicle 10. The battery 20 includes plural battery modules 30, a battery case 40, and plural cover boards 60.

### Battery Module

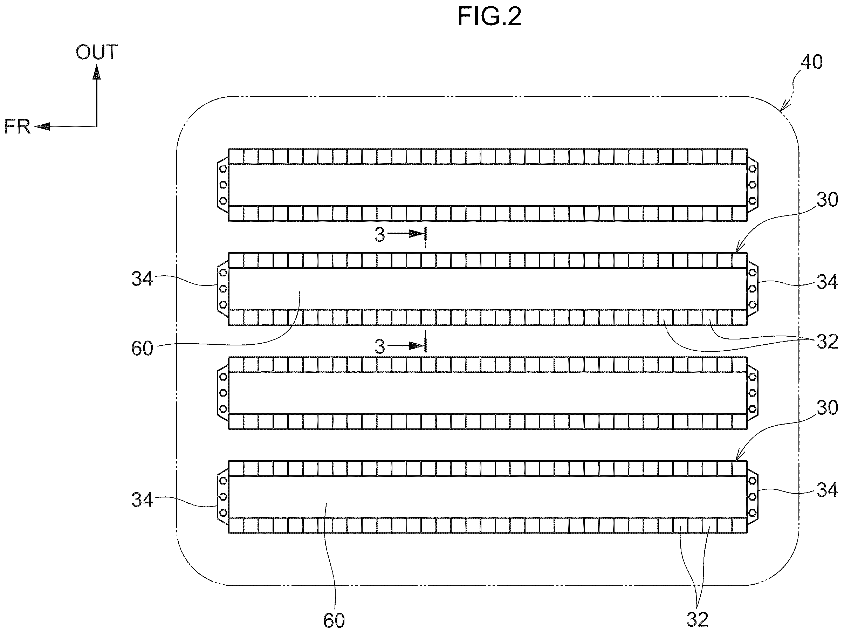

As illustrated in Fig. 2, the plural battery modules (battery stacks) 30 are arranged with their length directions aligned with the vehicle front-rear direction, and are arrayed alongside each other in the vehicle width direction. The two length direction end portions of each of the battery modules 30 are fixed to a lower cover 42 of the battery case 40 through end plates 34.

Each of the battery modules 30 includes plural battery cells 32 that have been arrayed along the length direction of the battery module 30. The plural battery cells 32 are storage batteries (secondary batteries) for storing power to be supplied to the above electric motor or the like.

Each of the battery cells 32 is formed in a flattened cuboidal shape. Each of the battery cells 32 is arranged with its length direction along the vehicle width direction, and its thickness direction along the vehicle front-rear direction. These battery cells 32 are electrically connected together in series in a state stacked along the length direction of the respective battery module 30.

Note that a non-illustrated thermo-insulation material is provided between the adjacent battery cells 32. Moreover, cover boards 60, described later, are bonded to upper faces 30U of the battery modules 30.

### Battery Case

As illustrated in Fig. 1, the plural battery modules 30 are housed in a battery case 40. The battery case 40 is formed in a flattened box shape overall, and is arranged at a lower side of a non-illustrated battery frame. The battery case 40 includes a lower cover 42 and upper cover 52, divided in the vehicle height direction.

The lower cover 42 is formed from a metal sheet, such as a steel sheet or the like. The lower cover 42 is formed in a box shape having an opening at the upper side thereof, and configures a lower portion of a battery case 40. A lower wall (bottom wall) of the lower cover 42 is configured as a lower cover section 44 that covers the lower faces of the plural battery modules 30 from below.

The lower cover section 44 is formed in a plate shape, and is arranged with its thickness direction along the vehicle height direction. A flange 46 is provided to an opening side end portion of the lower cover 42 so as to jut out toward the outside. The upper cover 52 is arranged at the upper side of the lower cover 42.

The upper cover 52 is formed from a metal sheet, such as a steel sheet or the like. The upper cover 52 is formed in a box shape open at the lower side thereof, and configures an upper end of the battery case 40. An upper wall (top wall) of the upper cover 52 is configured as an upper cover section 54 that covers upper faces 30U of the plural battery modules 30 from above. The upper cover section 54 is formed in a plate shape, and is arranged with its thickness direction along the vehicle height direction.

A flange 56 is provided to an opening side end portion of the upper cover 52 so as to jut out toward the outside. The flange 56 of the upper cover 52 and the flange 46 of the lower cover 42 are, in a state superimposed on each other in the vehicle height direction, joined together using non-illustrated nuts and bolts or the like.

The upper cover section 54 forms a floor of a vehicle cabin 12. In other words, the upper cover section 54 also serves the role of a floor panel forming the floor of the vehicle cabin 12. A non-illustrated seat cross member extending in the vehicle width direction, and a non-illustrated cross member configuring the battery frame, and the like are, for example, arranged on the upper face of the upper cover section 54.

Note that part of the floor of the vehicle cabin 12 may be formed by part of the upper cover section 54. Namely, the floor of the vehicle cabin 12 may be formed by at least part of the upper cover section 54. Moreover, the floor of the vehicle cabin 12 may, for example, be formed by the upper cover section 54 and a floor panel or the like.

### Cover Board

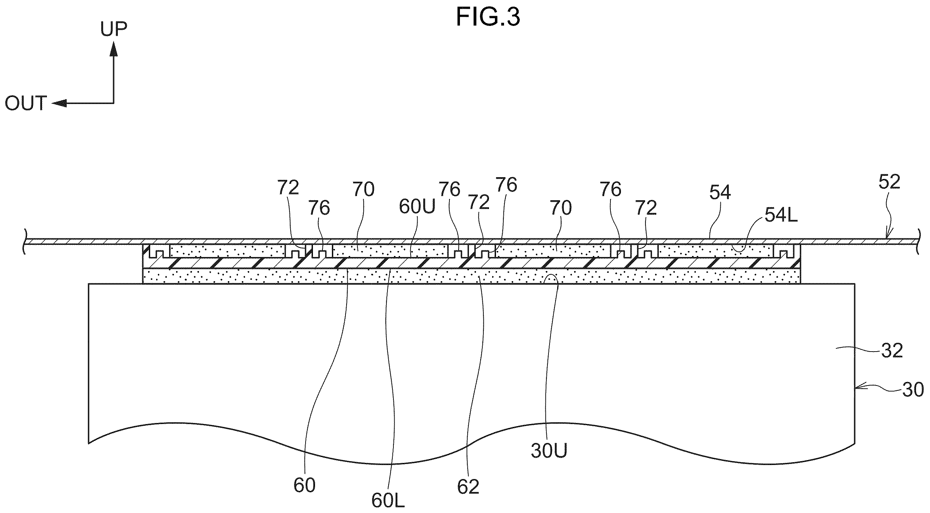

As illustrated in Fig. 2, the plural cover boards 60 are housed in the battery case 40. The cover boards 60 are configured as protective members to protect the upper faces 30U of the battery modules 30. The cover boards 60 also function as load distribution members (surface pressure distribution members) to distribute and transmit vertical load from the upper cover section 54 to the upper faces 30U of the battery modules 30 by being interposed between the upper cover section 54 (see Fig. 3) and the battery modules 30.

The plural cover boards 60 are, for example, made from a resin (resin boards), and are arranged with their thickness directions along the vehicle height direction. Moreover, the plural cover boards 60 are formed in rectangular shapes having a length direction along the vehicle front-rear direction. These cover boards 60 are arranged so as to be positioned on the upper faces 30U of the plural battery modules 30, at a spacing away from each other in the vehicle width direction. The plural cover boards 60 also span from a one-end side to the other-end side in the length direction of the battery modules 30.

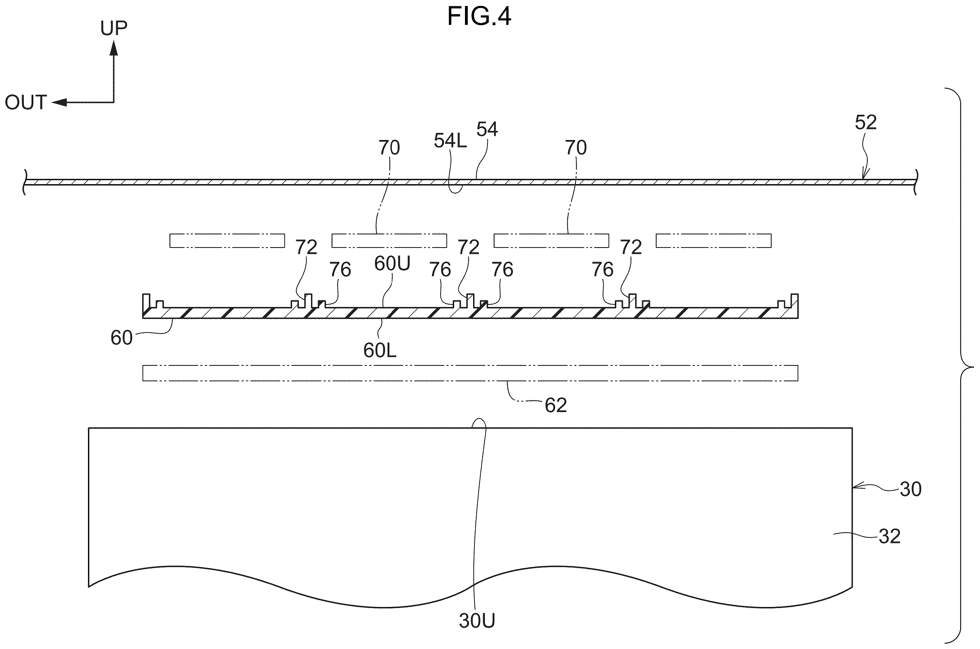

As illustrated in Fig. 3 and Fig. 4, lower faces 60L of the cover boards 60 are bonded to vehicle width direction intermediate portions of the upper faces 30U of the battery modules 30. Specifically, the lower faces 60L of the cover boards 60 and the upper faces 30U of the battery modules 30 are bonded together through an adhesive layer 62. The adhesive layer 62 is formed, for example, from a cured urethane-based adhesive. Note that the substance that the adhesive layer 62 is made from may be varied as appropriate.

The upper faces 30U of the battery modules 30 are formed by the upper faces of the plural battery cells 32 arrayed along the length direction of the battery modules 30. There is the possibility of height differences being present between the upper faces of the plural battery cells 32, due to manufacturing tolerances of the battery cells 32 and the like.

In order to address this, in the present exemplary embodiment, height differences between the upper faces of the plural battery cells 32 are absorbed by bonding the lower faces 60L of the cover boards 60 to the upper faces 30U of the battery modules 30 with the adhesive layer 62 interposed therebetween. As a result, the lower faces 60L of the cover boards 60 and the upper faces 30U of the battery modules 30 are bonded with a specific adhesive strength.

Upper faces 60U of the cover boards 60 are adhered to a lower face 54L of the upper cover section 54. Specifically, the upper faces 60U of the cover boards 60 are adhered to the lower face 54L of the upper cover section 54 with plural adhesive layers 70 interposed therebetween. The adhesive layers 70 are, for example, formed from a cured silicone-based adhesive. Note that the substance that the adhesive layers 70 are made from may be modified as appropriate.

### Ribs

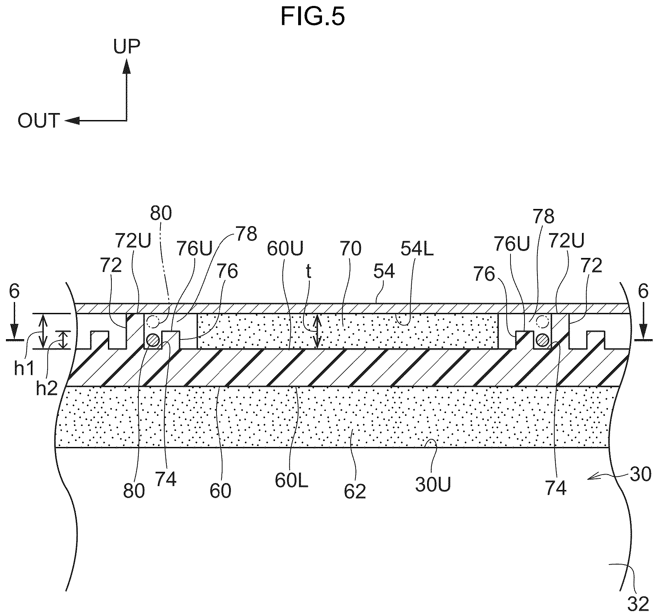

Plural (five in the present exemplary embodiment) ribs 72 are provided to the upper faces 60U of the cover boards 60 to support the lower faces 54L of the upper cover section 54. The plural ribs 72 function as spacers to secure a specific gap t (see Fig. 5) between the upper faces 60U of the cover boards 60 and the lower face 54L of the upper cover section 54 when bonding the upper faces 60U of the cover boards 60 and the lower face 54L of the upper cover section 54 together.

Note that the ribs 72 are an example of projection portions. The ribs 72, and guide ribs 76, described later, are omitted from illustration in Fig. 2.

The plural ribs 72 are, as an example, integrally formed to the cover boards 60 using a resin. The plural ribs 72 extend along the length direction of the cover boards 60 (the vehicle front-rear direction), and span from the length direction one-end side to the other-end side of the cover boards 60. The plural ribs 72 are arranged at a spacing away from each other in the width direction of the cover boards 60 (the vehicle width direction). Two ribs 72 from out of these ribs 72 are provided along the two width direction end portions of the cover board 60.

As illustrated in Fig. 5, the plural ribs 72 project upward from the upper faces 60U of the cover boards 60. The lateral cross-section profile of each of the ribs 72 is configured as a rectangular shape. An upper face 72U of each of the ribs 72 is configured as a flat, substantially horizontal, face that makes face-to-face contact with the lower face 54L of the upper cover section 54. Due to the lower face 54L of the upper cover section 54 being supported by the upper faces 72U of the ribs 72, the specific gap t is formed between the upper faces 60U of the cover boards 60 and the lower face 54L of the upper cover section 54.

A height (projection amount) h1 of each of the ribs 72 as they project from the upper faces 60U of these cover boards 60 is set according to a design value of a layer thickness t of the adhesive layer 70. The adhesive layers 70 are provided between adjacent ribs 72. The adhesive layers 70 are accordingly formed between the adjacent ribs 72 at the specific layer thickness t corresponding to the height h1 of the ribs 72.

### Through-Path

Through-paths 74 are formed between the adhesive layers 70 and the ribs 72, for example, for passing a wire 80 through, such as a steel wire, to cut the adhesive layer 70 when performing maintenance on the battery modules 30. Specifically, the guide ribs 76 are provided on the upper faces 60U of the cover boards 60 between the ribs 72 and the adhesive layers 70. Note that the wire 80 is an example of a cutting tool.

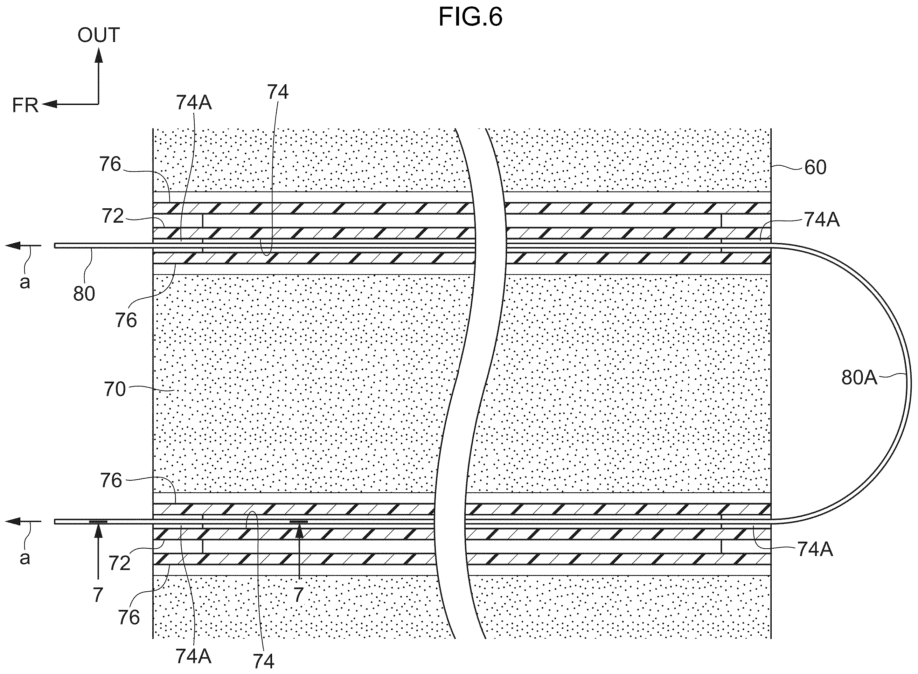

As illustrated in Fig. 5 and Fig. 6, the guide ribs 76 extend in the length direction of the cover boards 60 (the vehicle front-rear direction) alongside the ribs 72, and span from a length direction one-end side of the cover board 60 to the other-end side thereof. The guide ribs 76 are respectively provided at each width direction (vehicle width direction) side of the adhesive layer 70.

Each of the guide ribs 76 projects upward from the upper faces 60U of the cover boards 60. The lateral cross-section profile of each of the guide ribs 76 is configured in a rectangular shape. An upper face 76U of each of the guide ribs 76 is configured as a flat, substantially horizontal, face. The through-paths 74 are formed between the guide ribs 76 and the ribs 72.

The through-paths 74 are formed spanning from the length direction one-end side of the cover board 60 to the other-end side thereof. Namely, the through-paths 74 pierce through between the upper faces 60U of the cover boards 60 and the lower face 54L of the upper cover section 54 in the cover board 60 length direction (vehicle front-rear direction).

As illustrated in Fig. 5, a height (projection amount) h2 of the guide ribs 76 projecting from the upper faces 60U of the cover boards 60 is smaller than the height h1 of the ribs 72. The upper faces 76U of the guide ribs 76 are accordingly arranged at a spacing away from the lower face 54L of the upper cover section 54. Namely, a gap 78 is formed through the through-path 74 between the upper faces 76U of the guide ribs 76 and the lower face 54L of the upper cover section 54. The wire 80 is configured so as to be able to move from the through-path 74 into the adhesive layer 70 through the gap 78.

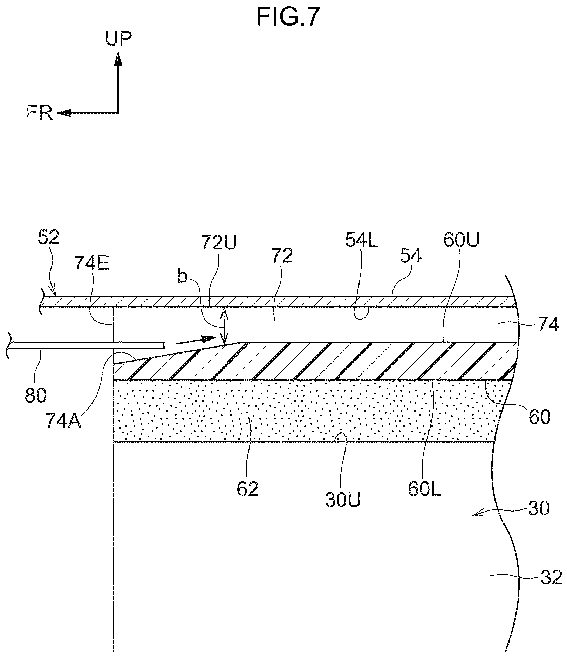

As illustrated in Fig. 7, a length direction one-end 74E side (vehicle front side) of the through-path 74 widens on progression toward the one-end 74E of the through-path 74. Specifically, at the one-end 74E side of the through-path 74, the upper face 60U of the cover board 60 that configures the lower face of the through-path 74 is configured as an inclined face 74A inclined downward on progression toward the one-end 74E of the through-path 74. A vertical width (height) b of the through-path 74 widens on progression toward the one-end 74E of the through-path 74 due to the inclined face 74A. This thereby facilitates insertion of the wire 80, serving as a cutting tool, into the one-end 74E of the through-path 74.

As illustrated in Fig. 6, the inclined face 74A is not limited to being formed at the length direction one-end side of the through-path 74, and may be formed at the length direction other-end side (vehicle rear side) of the through-path 74. Note that the inclined face 74A may be formed to at least one out of the two length direction end sides of the through-path 74. Moreover, the inclined faces 74A may also be omitted from the cover board 60.

In the present exemplary embodiment, at the one-end 74E side of the through-path 74, the vertical width b of the through-path 74 widens on progression toward the one-end 74E. However, for example, at the one-end 74E side of the through-path 74, a lateral width of the through-path 74 may be configured so as to widen on progression toward the one-end 74E.

Specifically, at the one-end 74E side of the through-path 74, an inclined face, which is inclined outward on progression toward the one-end 74E side of the through-path 74, may be formed on at least one opposing face of the mutually opposing faces of the ribs 72 and the guide ribs 76. This thereby facilitates insertion of the wire 80, serving as a cutting tool, into the one-end 74E of the through-path 74.

### Cover Board-to-Upper Cover Section Bonding Method

Next, description follows regarding an example of a method for bonding the cover boards 60, and the upper cover section 54 of the upper cover 52, together.

When bonding the upper faces 60U of the cover boards 60 and the lower face 54L of the upper cover section 54 together with the adhesive layers 70 interposed therebetween, for example, the upper cover 52 is mounted on a working surface in a state in which the lower face 54L of the upper cover section 54 is facing upward. An adhesive is then coated on the upper faces 60U of the cover boards 60 between the adjacent ribs 72 at a thickness exceeding the height h1 of the ribs 72 (see Fig. 5).

In this state, the upper faces 72U of the plural ribs 72 projecting out from the upper faces 60U of the cover boards 60 are mounted to the lower face 54L of the upper cover section 54, and the adhesive between the upper faces 60U of the cover boards 60 and the lower face 54L of the upper cover section 54 is pressed out. The adhesive layers 70 are thereby, as illustrated in Fig. 5, formed between the upper faces 60U of the cover boards 60 and the lower face 54L of the upper cover section 54, at the specific layer thickness t corresponding to the height h1 of the ribs 72.

Note that the method of bonding the upper faces 60U of the cover boards 60 to the lower face 54L of the upper cover section 54 is not limited thereto, and may be modified as appropriate.

### Upper Cover Removal Method

Next description follows regarding an example of a method of removing the upper cover 52.

As illustrated in Fig. 1, firstly, non-illustrated nuts and bolts or the like, for joining the respective flanges 46, 56 of the lower cover 42 of the battery case 40 and the upper cover 52 together, are removed. Next, the flange 56 is pulled up at both vehicle front-rear direction sides of the upper cover 52 respectively, exposing both ends of the through-paths 74 formed between the upper cover section 54 and the cover boards 60.

Next, as illustrated in Fig. 6, on a vehicle front-rear direction one-side (vehicle front side) of the upper cover section 54, the wire 80 is inserted into one through-path 74 from out of the through-paths 74 at the two width direction sides of the adhesive layer 70, and the wire 80 is passed through the through-path 74.

Next, on the vehicle front-rear direction other-side (vehicle rear side) of the upper cover section 54, the wire 80 projecting out from the one through-path 74 is curved in a plan view U-shape and inserted into the other through-path 74, and the wire 80 is passed through this through-path 74. This means that the two end portions of the wire 80 respectively project out from the through-paths 74, present at the two width direction sides of the adhesive layer 70, at the vehicle front-rear direction one-side of the upper cover section 54.

Next, at the vehicle front-rear direction other-side of the upper cover section 54, a curved section 80A of the curved wire 80 is pulled upward, and the curved section 80A is arranged at a height of the gap 78 between the guide ribs 76 and the upper cover section 54 at the two width direction sides of the adhesive layer 70. The wire 80 is accordingly, as illustrated by the double-dot broken lines in Fig. 5, moved upward in the through-path 74.

In this state, as illustrated in Fig. 6, at the vehicle front-rear direction one-side of the upper cover section 54, the two end portions of the wire 80 that respectively project out from the through-paths 74 at the two width direction sides of the adhesive layers 70 are pulled, as indicated by arrow a. The curved section 80A of the wire 80 is thereby slid along the gap 78 between the guide ribs 76 at the two sides of the adhesive layer 70 and the upper cover section 54, and the adhesive layer 70 is cut.

The plural adhesive layers 70 for bonding the upper faces 60U of the plural cover boards 60 and the lower face 54L of the upper cover section 54 together are respectively cut by repeating the procedure described above. The upper cover 52 is accordingly able to be removed from the plural cover boards 60.

Note that the method of cutting the adhesive layers 70 may be modified as appropriate. For example, in a state in which the wire 80 has passed through the through-path 74 at one width direction side of the adhesive layer 70, the adhesive layer 70 may be cut with the wire 80 by sliding the wire 80 toward the adhesive layer 70 side.

### Operation and Advantageous Effects

Description follows regarding the operation and advantageous effects of the present exemplary embodiment.

As illustrated in Fig. 1, in the vehicle lower section structure according to the present exemplary embodiment, the battery case 40 includes the upper cover 52 and the lower cover 42 that can be combined in the vehicle height direction, and is arranged at a lower section of the vehicle 10. The plural battery modules 30 are housed in the battery case 40.

The upper cover 52 of the battery case 40 includes the upper cover section 54 covering the upper faces 30U of the plural battery modules 30. The cover boards 60 are respectively arranged between the battery modules 30 and the upper cover section 54.

As illustrated in Fig. 5, each of the cover boards 60 includes plural ribs 72. The plural ribs 72 project from the upper faces 60U of the cover boards 60 and support the lower face 54L of the upper cover section 54. The adhesive layers 70 are each also provided between adjacent ribs 72. The upper faces 60U of the cover boards 60 and the lower face 54L of the upper cover section 54 are bonded together by the adhesive layers 70.

When bonding the upper faces 60U of the cover boards 60 and the lower face 54L of the upper cover section 54 together through the adhesive layers 70, the lower face 54L of the upper cover section 54 is supported by the plural ribs 72 projecting out from the upper faces 60U of the cover boards 60. The specific gap t is accordingly formed corresponding to the height h1 of the ribs 72 between the upper faces 60U of the cover boards 60 and the lower face 54L of the upper cover section 54. The adhesive layers 70 bonding the upper faces 60U of the cover boards 60 and the lower face 54L of the upper cover section 54 together can accordingly be configured at the specific layer thickness t due to this gap t.

This means that in the present exemplary embodiment, the upper faces 60U of the cover boards 60 covering the upper faces 30U of the battery modules 30, and the lower face 54L of the upper cover section 54, can be bonded through the adhesive layers 70 having the specific layer thickness t.

Moreover, the through-paths 74 are formed alongside the ribs 72 and between the ribs 72 and the adhesive layer 70. The through-paths 74 are respectively formed at the two width direction sides of the adhesive layer 70, and also pass, in the length direction of the battery modules 30, alongside the ribs 72 through between the upper cover 52 and each of the cover boards 60.

When the upper faces 60U of the cover boards 60 and the lower face 54L of the upper cover section 54 have been bonded together through the adhesive layers 70, the upper cover 52 becomes difficult to remove from the cover boards 60. This means that, for example, it might take some effort to perform maintenance or the like on the battery modules 30.

In order to address this, in the present exemplary embodiment, as illustrated in Fig. 6, when removing the upper cover 52 from the cover board 60, the wire 80, serving as a cutting tool, is curved in a plan view U-shape, and passed through the through-paths 74 at the two width direction sides of the adhesive layer 70. In this state, the adhesive layer 70 can be cut by the curved section 80A of the wire 80 by pulling the two end portions of the wire 80, as indicated by arrow a. This thereby enables the upper cover 52 to be easily removed from the cover boards 60.

Moreover, as illustrated in Fig. 5, the cover boards 60 each include the guide ribs 76. The guide ribs 76 project from the upper faces 60U of the cover boards 60 between the ribs 72 and the adhesive layer 70, and are arranged at a spacing away from the lower face 54L of the upper cover section 54. The through-paths 74 are formed between the guide ribs 76 and the ribs 72.

This means that when the wire 80, serving as a cutting tool, is passed through the through-paths 74, the wire 80 is guided by the ribs 72 and the guide ribs 76, enabling the wire 80 to be passed through the through-paths 74 easily.

Moreover, as illustrated in Fig. 7, at the one-end 74E side of the through-path 74, the inclined face 74A, inclined downward on progression toward the one-end 74E of the through-path 74, is formed to the lower face of the through-path 74. This means that due to the inclined face 74A, the height direction vertical width (height) b of the through-path 74 widens on progression toward the one-end 74E side of the through-path 74. This thereby facilitates insertion of the wire 80, serving as a cutting tool, into the one-end 74E side of the through-path 74.

Similarly, as illustrated in Fig. 6, at the other-end side of the through-path 74, the inclined face 74A, inclined downward on progression toward the other-end 74E of the through-path 74, is formed to the lower face of the through-path 74. This thereby facilitates insertion of the wire 80, serving as a cutting tool, into the other-end of the through-path 74. This thereby enables the upper cover 52 to be removed from the cover boards 60 even easier.

Furthermore, as illustrated in Fig. 5, when bonding the upper faces 60U of the cover boards 60 and the lower face 54L of the upper cover section 54 together through the adhesive layers 70, the adhesive layers 70 are restricted from flowing to the through-path 74 side prior to curing by the guide ribs 76. This thereby readily secures the through-paths 74 between the ribs 72 and the adhesive layer 70.

In the thus configured present exemplary embodiment, the through-paths 74 can be secured between the ribs 72 and the adhesive layer 70, while also bonding the upper faces 60U of the cover boards 60 and the lower face 54L of the upper cover section 54 together through the adhesive layer 70 of specific layer thickness t.

Moreover, as illustrated in Fig. 1, the upper cover section 54 of the upper cover 52 forms the floor of the vehicle cabin 12. The present exemplary embodiment accordingly enables the number of components to be reduced compared to cases in which the floor of the vehicle cabin 12 is formed by a floor panel separate to the upper cover section 54.

On the other hand, in cases in which the floor of the vehicle cabin 12 is formed by the upper cover section 54, this might possibly lead to the battery modules 30 being damaged or the like by the weight of a passenger or the like being transmitted locally, as localized vertical load, to the upper faces 30U of the battery modules 30 through the upper cover section 54.

In order to address this issue, in the present exemplary embodiment, the vertical load acting on the upper cover section 54 is distributed and transmitted to the upper faces 30U of the battery modules 30 through the cover boards 60. This thereby enables the battery modules 30 to be suppressed from being damaged or the like.

The battery modules 30 each include the plural battery cells 32 arrayed in the length direction of the battery modules 30. Moreover, plural ribs 72 extend along the vehicle front-rear direction and are also arranged at a spacing to each other in the vehicle width direction. These ribs 72 are arranged spanning plural battery cells 32 when viewed along the vehicle height direction.

Due to the plural ribs 72 being arranged so as to span the plural battery cells 32 when viewed along the vehicle height direction, vertical load acting on the upper cover section 54, for example, is distributed and transmitted to the upper faces of the battery cells 32 through the plural ribs 72 and the cover board 60. This thereby enables damage and the like to be suppressed from occurring to the battery cells 32.

Moreover, the plural battery cells 32 are arrayed along the length direction of the battery modules 30, namely along the vehicle front-rear direction. This means that in the present exemplary embodiment, the number of the battery cells 32 that can be arrayed in a single row can be increased compared to cases in which the plural battery cells 32 are arrayed in the vehicle width direction.

Moreover, the upper cover 52 is made from a metal. This means that strength can be secured in the upper cover section 54, while making a thickness of the upper cover section 54 configuring the upper cover 52 thin.

On the other hand, the cover boards 60 are made from a resin. This accordingly enables the ribs 72 and the guide ribs 76 to be formed on the upper faces 60U of the cover boards 60 easily, while also achieving a reduction in weight for the cover boards 60. Moreover, due to the cover boards 60 being made from resin, the adhesiveness between the cover boards 60 and the upper cover section 54 can be raised.

Moreover, due to the cover boards 60 made from a resin being interposed between the battery modules 30 and the upper cover section 54, the upper cover 52 forming the floor of the vehicle cabin 12 can be electrically insulated from the battery modules 30.

Furthermore, due to the cover boards 60 being made from resin, when cutting the adhesive layers 70 with the wire 80, such as a steel wire, the battery modules 30 and the wire 80 are electrically insulated by the cover boards 60. This thereby enables the adhesive layers 70 to be cut easily by the wire 80, such as a steel wire, facilitating cutting of the adhesive layer 70 with the wire 80, such as a steel wire or the like.

Moreover, as illustrated in Fig. 5, the lower faces 60L of the cover boards 60 are bonded to the upper faces 30U of the battery modules 30. Namely, the upper faces 30U of the battery modules 30 are bonded to the lower face 54L of the upper cover section 54 through the cover boards 60.

This means that, for example, if a collision object were to collide with the vehicle 10, and inside the battery case 40 the battery modules 30 were to move relatively toward the collision object side under the action of inertia, then there would be a possibility of the collision object interfering with the battery modules 30.

In order to address this issue, in the present exemplary embodiment the upper faces 30U of the battery modules 30 are bonded to the lower face 54L of the upper cover section 54 with the cover boards 60 interposed therebetween, as described above. This means that the upper cover section 54, the cover boards 60, and the battery modules 30 readily move as a single body toward the opposite side to a collision object when the collision object has collided with the vehicle 10. Interference of the collision object with the battery modules 30 can accordingly be suppressed.

Moreover, as described above, due to the cover boards 60 being made from resin, the adhesiveness between the cover boards 60 and the battery modules 30 can be raised.

### Modified Examples

Next, description follows regarding modified examples of the above exemplary embodiment.

In the above exemplary embodiments, the through-paths 74 are respectively formed at the two width direction sides of the adhesive layer 70. However, through-paths 74 are not limited to being formed at both width direction sides of the adhesive layer 70, and may be formed only at one width direction side of each of the adhesive layers 70. In such cases, for example, in a state in which a wire 80, serving as a cutting tool, has been passed through the through-path 74 at one width direction side of the adhesive layer 70, the adhesive layer 70 can be cut with the wire 80 by sliding the wire 80 to toward the adhesive layer 70 side.

Moreover, in the above exemplary embodiment the guide ribs 76 are formed to the upper faces 60U of the cover boards 60. However, the guide ribs 76 may be omitted from the cover boards 60. In such cases, the through-paths 74 can be formed between the adhesive layers 70 and the ribs 72 by adjusting the amount of adhesive such that the adhesive configuring the adhesive layers 70 does not reach the ribs 72.

Moreover, the through-paths 74 may be omitted. In other words, the adhesive layers 70 may be formed so as to span to the adjacent ribs 72. In such cases, when bonding the upper faces 60U of the cover boards 60 and the lower face 54L of the upper cover section 54 together through the adhesive layers 70, flow of the adhesive layers 70 prior to curing is restricted by the adjacent ribs 72. This means that, for example, the adhesive layer 70 is suppressed from leaking out from between the cover boards 60 and the upper cover 52 prior to curing.

Moreover, in the above exemplary embodiment, a cutting tool is configured by the wire 80 such as a steel wire or the like. However, the cutting tool is not limited to being the wire 80, and another tool capable of cutting the adhesive layer 70 may be employed therefor.

Moreover, in the above exemplary embodiment the ribs 72 and the guide ribs 76 of the cover boards 60 are arranged along the length direction of the battery modules 30 (the vehicle front-rear direction). However, the ribs 72 and the guide ribs 76 are not limited to being arranged along the length direction of the battery modules 30 and may, for example, be arranged along the width direction of the battery modules 30 (the vehicle width direction). Moreover, number and placement of the ribs 72 and the guide ribs 76 may be modified as appropriate.

Moreover, in the above exemplary embodiment the upper faces 72U of the ribs 72 directly support the lower face 54L of the upper cover section 54. However, a spacer, such as a sheet material or the like, may be interposed between the upper faces 72U of the ribs 72 and the lower face 54L of the upper cover section 54 to, for example, adjust a gap t between the upper faces 60U of the cover boards 60 and the lower face 54L of the upper cover section 54. Namely, in the above exemplary embodiment, the lower face 54L of the upper cover section 54 being supported by the ribs 72 (projection portions) not only encompasses configurations in which the lower face 54L of the upper cover section 54 is directly supported by the ribs 72, but also encompasses configurations in which the lower face 54L of the upper cover section 54 is supported indirectly through a spacer.

Moreover, in the above exemplary embodiment, projection portions projecting from the upper faces 60U of the cover boards 60 are configured by the ribs 72. However, such projection portions are not limited to being the ribs 72. As long as a specific gap t can be secured between the upper faces 60U of the cover boards 60 and the lower face 54L of the upper cover section 54, the projection portions may, for example, be projections or the like present as dots on the upper faces 60U of the cover boards 60.

Moreover, in the above exemplary embodiment the lower faces 60L of the cover boards 60 are bonded to the upper faces 30U of the battery modules 30. However, the lower faces 60L of the cover boards 60 are not necessarily bonded to the upper faces 30U of the battery modules 30.

Moreover, in the above exemplary embodiment the cover boards 60 are made from resin. However, the cover boards 60 are not limited to being made from resin, and may be made from a metal or the like.

Moreover, in the above exemplary embodiment the upper cover section 54 of the upper cover 52 forms the floor of the vehicle cabin 12. However, the floor of the vehicle cabin 12 is not limited to being formed by the upper cover section 54, and may be formed by providing a floor panel or the like above the upper cover section 54.

Moreover, in the above exemplary embodiment the upper cover 52 is formed in a box shape open at the lower side thereof. However, the upper cover 52 is not limited to being a box shape open at the lower side thereof and may, for example, be formed in a flat plate shape.

Moreover, in the above exemplary embodiment the battery modules 30 are arranged with their length directions along the vehicle front-rear direction. However, the battery modules 30 may be arranged with their length directions along the vehicle width direction. In such cases, plural battery cells 32 configuring the battery modules 30 are arrayed in the vehicle width direction.

Moreover, in the above exemplary embodiment plural battery modules 30 are housed in the battery case 40. However, a configuration may be adopted in which at least one battery module 30 is housed in the battery case 40.

Although the present disclosure has been described by way of an exemplary embodiment, the present disclosure is not limited to such an exemplary embodiment, and obviously an exemplary embodiment may be appropriately combined with various modified examples, and various embodiments may be implemented withing a range of the spirit of the present disclosure.

## Claims

1. A vehicle lower section structure, comprising:
a battery module (30) that is arranged at a lower section of a vehicle (10);
a battery case (40) that includes an upper cover section (54) covering an upper face (30U) of the battery module (30) and that houses the battery module (30);
a cover board (60) that includes a plurality of projection portions (72) each projecting from an upper face (60U) of the cover board (60), that is arranged between the battery module (30) and the upper cover section (54), and that supports a lower face (54L) of the upper cover section (54) by the plurality of projection portions (72); and
an adhesive layer (70) that is provided between adjacent projection portions (72), and that bonds the upper face (60U) of the cover board (60) to the lower face (54L) of the upper cover section (54).

2. The vehicle lower section structure of claim 1, wherein:
the projection portions (72) are each configured by a rib (72) extending in a specific direction; and
the adhesive layer (70) is provided between adjacent ribs (72).

3. The vehicle lower section structure of claim 2, wherein a through-path (74) is formed between the rib (72) and the adhesive layer (70) so as to run alongside the rib (72).

4. The vehicle lower section structure of claim 3, wherein the through-path (74) is formed at each side of the adhesive layer (70), and runs alongside the rib (72) so as to pass through between the upper cover section (54) and the cover board (60).

5. The vehicle lower section structure of claim 3 or claim 4, wherein:
the cover board (60) includes a guide rib (76) that projects from the upper face (60U) of the cover board (60) between the rib (72) and the adhesive layer (70), and that is arranged at a spacing away from the lower face (54L) of the upper cover section (54); and
the through-path (74) is formed between the rib (72) and the guide rib (76).

6. The vehicle lower section structure of any one of claim 3 to claim 5, wherein a one-end (74E) side of the through-path (74) widens on progression toward one end (74E) thereof.

7. The vehicle lower section structure of any one of claim 1 to claim 6, wherein a lower face of the cover board (60) is bonded to an upper face (30U) of the battery module (30).

8. The vehicle lower section structure of any one of claim 1 to claim 7, wherein at least part of the upper cover section (54) forms a floor of a vehicle cabin (12).

9. The vehicle lower section structure of any one of claim 1 to claim 8, wherein:
the upper cover section (54) is made from a metal; and
the cover board (60) is made from a resin.

10. The vehicle lower section structure of any one of claim 2 to claim 6, wherein:
the battery module (30) includes a plurality of battery cells (32) arrayed in the specific direction; and
the ribs (72) are arranged so as to span the plurality of the battery cells (32) as viewed along a vehicle height direction.

11. The vehicle lower section structure of claim 10, wherein:
the plurality of battery cells (32) are arrayed along a vehicle front-rear direction; and
the plurality of ribs (72) each extend along the vehicle front-rear direction and are arranged at a spacing to each other in a vehicle width direction.
